# NEUE EUROPÄISCHE PATENTSCHRIFT

(11) **EP 1 620 225 B2**
(45) Veröffentlichungstag und Bekanntmachung des Hinweises auf die Entscheidung über den Einspruch: **25.05.2011**
(45) Hinweis auf die Patenterteilung: 26.07.2006
(21) Anmeldenummer: 04724975.0
(22) Anmeldetag: 01.04.2004
(51) Int. Cl.: B23P 6/00, B23K 26/34, F01D 5/00

(54) **VERFAHREN ZUR REPARATUR UND/ODER MODIFIKATION VON BAUTEILEN EINER GASTURBINE**
METHOD FOR REPAIRING AND/OR MODIFYING COMPONENTS OF A GAS TURBINE
PROCÉDÉ DE RÉPARATION ET/OU MODIFICATION DE COMPOSANTS DE TURBINE À GAZ

(30) Priorität: 30.04.2003 DE 10319494
(43) Veröffentlichungstag der Anmeldung: 01.02.2006
(73) Patentinhaber: MTU Aero Engines GmbH, 80995 München (DE)
(72) Erfinder: LANGE, Anja, 30855 Langenhagen (DE); LANGE, Jens, 30855 Langenhagen (DE); SCHULZE, Uwe, 29308 Winsen (DE)
(86) Internationale Anmeldenummer: PCT/DE2004/000673
(87) Internationale Veröffentlichungsnummer: WO 2004/096487

(56) Entgegenhaltungen:
- EP-A1- 1 231 010
- DE-A1- 10 064 267
- DE-C- 19 935 274
- US-A- 4 326 833
- US-A- 5 269 057
- US-A1- 2003 105 538
- US-B1- 6 269 540
- LI L ET AL: "A reverse engineering system for rapid manufacturing of complex objects" ROBOTICS AND COMPUTER INTEGRATED MANUFACTURING, PERGAMON PRESS, OXFORD, GB, Bd. 18, Nr. 1, Februar 2002 (2002-02), Seiten 53-67, XP004312337 ISSN: 0736-5845
- HAFERKAMP H ET AL: "RAPID MANUFACTURING DURCH LASERSINTERN UND 3D-LASERSTRAHL-AUFTRAGSCHW EISSEN RAPID MANUFACTURING BY LASER SINTERING AND LASER CLADDING" LASER UND OPTOELEKTRONIK, FACHVERLAG GMBH. STUTTGART, DE, Bd. 27, Nr. 3, Juni 1995 (1995-06), Seiten 64-69, XP000955177 ISSN: 0722-9003
- ANDREAS GEBHARDT: 'Rapid Prototyping', 1996, CARL HAUSER VERLAG MÜNCHEN WIEN, ISBN 3-446-18240-3 Artikel 'Werkzeug für die schnelle Produktentwicklung'

## Beschreibung

Die Erfindung betrifft ein Verfahren zur Reparatur und/oder Modifikation von Bauteilen einer Gasturbine nach dem Oberbegriff des Patentanspruchs 1, wie aus der US-A-5269057 bekannt.

Gasturbinen, wie zum Beispiel Flugzeugtriebwerke, unterliegen einer hohen Beanspruchung und es können daher während des Betriebs schadhafte Bereiche am Triebwerk entstehen. In diesem Zusammenhang ist es wichtig, dass die schadhaften Bereiche des Triebwerks schnell und kostengünstig repariert werden können. Die hier vorliegende Erfindung betrifft ein Verfahren zur Reparatur von Bauteilen, insbesondere von stationären Bauteilen, einer Gasturbine, wie zum Beispiel der feststehenden Leitschaufeln eines Flugzeugtriebwerks. Die Erfindung ist aber auch für die konstruktive Modifikation und/oder lokale Werkstoffmodifikation von Bauteilen einer Gasturbine verwendbar.

Zur Reparatur schadhafter Bereiche, wie Risse wanddickenverringernde Verschleiß- und Korrosionserscheinungen, an Gasturbinen, kommen nach dem Stand der Technik Schweißverfahren oder Hochtemperatur-Lötverfahren zum Einsatz. Diese beiden aus dem Stand der Technik bekannten Reparaturverfahren weisen Einschränkungen hinsichtlich der reparablen Rissbreiten und Wanddicken sowie der Spannungsinduzierung bei warmrissanfälligen Materialien auf. Schadhafte Bereiche durch Impact-Schäden, die zu Verformungen und Aufreißen des Materials führen, sind mit den aus dem Stand der Technik bekannten Reparaturverfahren nicht reparabel. Mit Schweißverfahren oder Hochtemperatur-Lötverfahren lassen sich demnach nur eingeschränkte Schadensbilder an Triebwerksbauteilen reparieren. Zur Reparatur größerer schadhafter Bereiche, zur konstruktiven Modifikation oder lokalen Werkstoffmodifikation ist es aus dem Stand der Technik bekannt, Ersatzteile durch Feingießen nach dem Wachsausschmelzverfahren herzustellen. Dies erfordert jedoch einen teueren und zeitaufwendigen Modellbau bzw. Formenbau.

Hiervon ausgehend liegt der vorliegenden Erfindung das Problem zu Grunde, ein neuartiges Verfahren zur Reparatur und/oder Modifikation von Bauteilen einer Gasturbine zu schaffen.

Dieses Problem wird dadurch gelöst, dass das eingangs genannte Verfahren durch die Merkmale des kennzeichnenden Teils des Patentanspruchs 1 weitergebildet ist.

Im Sinne des erfindungsgemäßen Verfahrens zur Reparatur und/oder Modifikation von Bauteilen einer Gasturbine wird zuerst zumindest ein Abschnitt des zu reparierenden oder zu modifizierenden Bauteils aus dem Bauteil herausgearbeitet, insbesondere herausgetrennt. Anschließend wird zumindest bei der ersten Reparatur oder Modifikation dieses Abschnitts des Bauteils ein Datensatz für ein herzustellendes Ersatzteil erzeugt. Das Ersatzteil wird darauffolgend mit Hilfe eines Rapid Manufacturing Prozesses hergestellt. Anschließend wird das hergestellte Ersatzteil in das zu reparierende oder zu modifizierende Bauteil integriert.

Mit Hilfe des erfindungsgemäßen Verfahrens kann eine Reparatur oder Modifikation ohne Modell- und Formenbau erfolgen. Dies hat große Kostenvorteile, insbesondere bei eingeschränkten Stückzahlen. Weiterhin ist eine schnelle Reparatur möglich. Auch dies bringt Vorteile durch eine verkürzte Durchlaufzeit der zu reparierenden Bauteile mit sich. Ein weiterer Vorteil des erfindungsgemäßen Verfahrens liegt darin, dass der Verbindungsbereich von Ersatzteil und Bauteil variabel ist und damit in Zonen geringer Beanspruchung gelegt werden kann. Die Ersatzteile können aus dem gleichen oder auch aus einen anderen Werkstoff wie das zu reparierende bzw. zu modifizierende Bauteil hergestellt werden. Auch können Beschädigungen ausgebessert werden, die bislang nicht reparabel waren.

Nach einer vorteilhaften Weiterbildung der Erfindung wird der beschädigte Abschnitt des zu reparierenden Bauteils und zusätzlich ein sich an den beschädigten Abschnitt anschließender Toleranzabschnitt aus dem Bauteil herausgetrennt. Hierdurch können eventuell vorgeschädigte Bereiche des Bauteils in einem Schritt mitausgebessert werden.

Dies reduziert die Anfälligkeit gegenüber Folgeschäden und erhöht damit die Betriebszeit des reparierten Bauteils.

Bevorzugte Weiterbildungen der Erfindung ergeben sich aus den abhängigen Unteransprüchen und der nachfolgenden Beschreibung.

Ein Ausführungsbeispiel der Erfindung wird, ohne hierauf beschränkt zu sein, an Hand der Zeichnung näher erläutert. In der Zeichnung zeigt:
- Fig. 1:: ein stark schematisiertes Blockschaltbild zur Verdeutlichung des erfindungsgemäßen Verfahrens zur Reparatur von Bauteilen einer Gasturbine;
- Fig. 2:: ein schematisiertes Blockschaltbild eines Bearbeitungsschritts des erfindungsgemäßen Verfahrens nach Fig. 1; und
- Fig. 3:: ein Beispiel des erfindungsgemäßen Verfahrens.

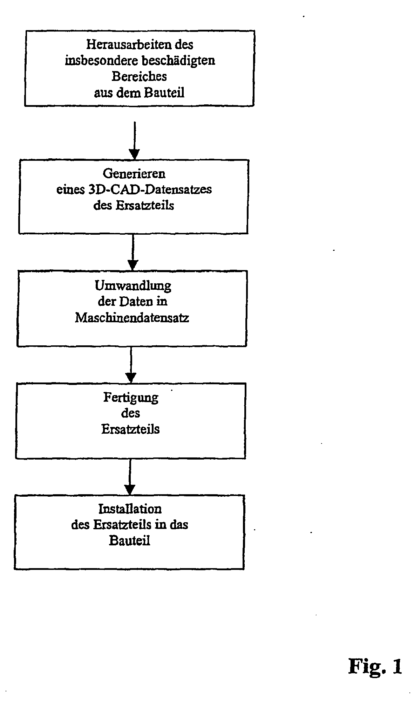

Das erfindungsgemäße Verfahren zur Reparatur und/oder Modifikation von Bauteilen, insbesondere von stationären Bauteilen, einer Gasturbine wird nachfolgend unter Bezugnahme auf Fig. 1 bis 3 im Detail erläutert.

Fig. 1 zeigt ein stark schematisiertes Blockschaltbild bzw. Ablaufdiagramm zur Verdeutlichung des erfindungsgemäßen Verfahrens. Zur Reparatur bzw. Modifikation eines Bauteils einer Gasturbine wird nach einer Identifikation eines insbesondere beschädigten Abschnitts des zu reparierenden bzw. zu modifizierenden Bauteils der Gasturbine zumindest dieser Abschnitt aus dem Bauteil herausgearbeitet, insbesondere herausgetrennt. Davor oder nachfolgend wird ein Datensatz für ein herzustellendes Ersatzteil erzeugt. Das Ersatzteil wird dann mithilfe eines Rapid Manufacturing Prozesses hergestellt. Das hergestellte Ersatzteil wird sodann in das zu reparierende oder zu modifizierende Bauteil der Gasturbine integriert. Es liegt demnach im Sinne der hier vorliegenden Erfindung, den beschädigten Bereich des Bauteils aus dem Bauteil herauszuarbeiten, insbesondere herauszutrennen, und ein entsprechendes Ersatzteil mithilfe eines Rapid Manufacturing Prozesses herzustellen.

Nachfolgend wird auf die einzelnen Verfahrensschritte, die oben sehr kurz dargestellt worden sind, im Detail eingegangen.

Der insbesondere beschädigte Abschnitt des zu reparierenden bzw. zu modifizierenden Bauteils wird aus dem Bauteil mithilfe eines elektroerosiven oder mechanischen trennenden oder abtragenden Verfahrens herausgearbeitet. Dabei liegt es im Sinne der Erfindung, bei einer Reparatur des Bauteils nicht nur den beschädigten Abschnitt aus dem zu reparierenden Bauteil herauszutrennen, sondern zusätzlich zu dem beschädigten Abschnitt einen sich an den beschädigten Abschnitt anschließenden Toleranzabschnitt. Dies hat den Vorteil, dass zusätzlich zum beschädigten Abschnitt eventuell vorgeschädigte bzw. ermüdete Bereiche des zu reparierenden Bauteils zusammen mit dem beschädigten Abschnitt aus dem Bauteil herausgetrennt werden. Hierdurch wird ein repariertes Bauteil nach der Reparatur weniger anfällig gegenüber einer erneuten Beschädigung im Bereich des reparierten Abschnitts.

Im Zusammenhang mit dem Herausarbeiten des beschädigten (bei einer Reparatur des Bauteils) oder auch unbeschädigten Abschnitts (bei einer Modifikation des Bauteils) aus dem Bauteil sei angemerkt, dass dann, wenn eine systematische Beschädigung des Bauteils vorliegt oder eine entsprechende Modifikation vorgenommen wird, das Herausarbeiten des beschädigten Abschnitts mithilfe einer speziell hierfür angepassten Vorrichtung erfolgen kann. Voraussetzung hierfür ist jedoch eine reproduzierbare Geometrie des zu reparierenden bzw. zu modifizierenden Bauteils nach unterschiedlichen Vorbeanspruchungen. In diesem Fall müssen Herstellungstoleranzen und zusätzlich im Betrieb der Gasturbine auftretende Verformungen, Verschleiß oder sonstige Beanspruchungen eine einheitliche Geometrie des herzustellenden Ersatzteils zulassen. Bei nachfolgenden Reparaturen oder Modifikationen des gleichen Abschnitts des Bauteils kann in diesem Fall auf die in Fig. 1 gezeigten Schritte: Generieren eines 3D-Datensatzes des Ersatzteils, Umwandlung der Daten in einen Maschinendatensatz, verzichtet werden.

Liegt hingegen eine nicht-systematische Beschädigung des Bauteils vor, so wird der beschädigte Abschnitt aus dem zu reparierenden Bauteil individuell, d.h. ohne eine entsprechend angepasste Vorrichtung aus dem Bauteil herausgearbeitet. Dies gilt auch dann, wenn Herstellungstoleranzen und im Betrieb der Gasturbine auftretende Vorformungen derselben keine einheitliche Geometrie des herzustellenden Ersatzteils zulassen.

Nach oder auch vor dem Herausarbeiten, insbesondere Heraustrennen, des insbesondere beschädigten Abschnitts sowie ggf. eines an sich den beschädigten Abschnitts anschließenden Toleranzabschnitts aus dem zu reparierenden Bauteil, wird ein Datensatz für das herzustellende Ersatzteil erzeugt. In diesem Zusammenhang wird zuerst ein dreidimensionaler CAD-Datensatz für das herzustellende Ersatzteil erzeugt. Dieser 3D-CAD-Datensatz für das herzustellende Ersatzteil wird anschließend in einen Maschinendatensatz umgewandelt. Hierauf wird später noch in größerem Detail eingegangen.

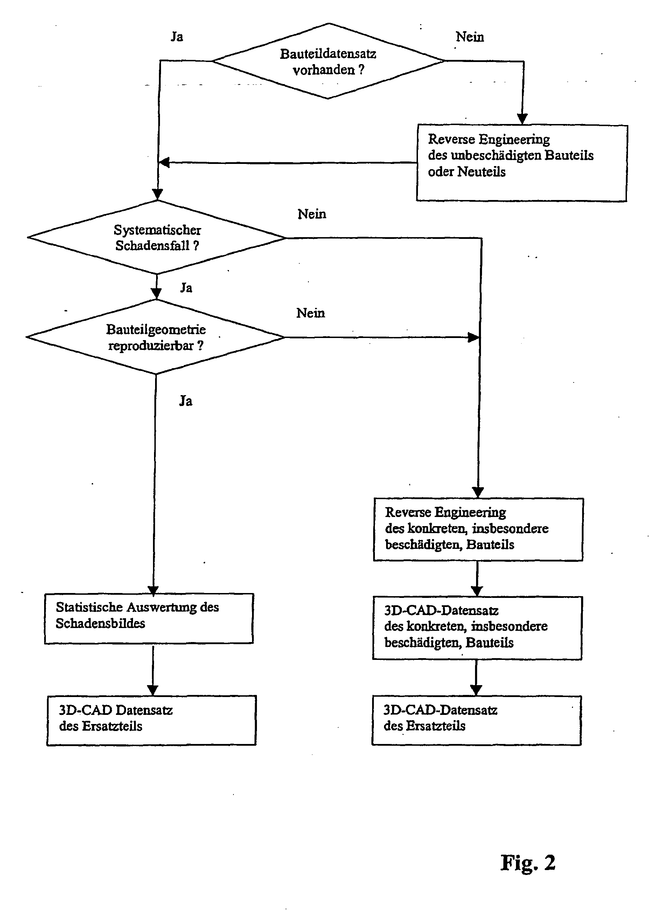

Die Erzeugung des 3D-CAD-Datensatzes des herzustellenden Ersatzteils ist im Blockschaltbild bzw. Ablaufdiagramm gemäß Fig. 2 verdeutlicht. Zuerst wird überprüft, ob ein 3D-CAD-Datensatz für das zu reparierende oder zu modifizierende, jedoch unbeschädigte Bauteil bzw. ein entsprechendes Neuteil vorliegt. Liegt ein solcher 3D-CAD-Datensatz für das unbeschädigte Bauteil vor, so wird anschließend überprüft, ob erstens eine systematische Beschädigung des Bauteils vorliegt und ob zweitens die Geometrie des beschädigten Bauteils reproduzierbar ist. In dem Fall, in dem sowohl eine systematische Beschädigung des Bauteils vorliegt, als auch gleichzeitig die Geometrie des beschädigten Bauteils reproduzierbar ist, kann anhand statistischer Auswertungen der Größe des beschädigten Abschnitts des zu reparierenden Bauteils sowie unter Berücksichtung eines sich an den beschädigten Abschnitt anschließenden Toleranzabschnitts, der vorgeschädigte Werkstoffbereiche sowie stark beanspruchte Bereiche des Bauteils bei der Reparatur berücksichtigt, die erforderliche Geometrie des herzustellenden Ersatzteils abgeleitet werden und daraus der 3D-CAD-Datensatz generiert werden. Der 3D-CAD-Datensatz ist dann für alle folgenden Reparaturen und/oder Modifikationen des gleichen Abschnitts verwendbar. Liegt hingegen keine systematische Beschädigung des zu reparierenden Bauteils vor und/oder ist die Geometrie des beschädigten oder zu modifizierenden Bauteils nicht reproduzierbar, so wird ein Reverse Engineering des Bauteils oder zumindest der relevanten Bauteilbereiche durchgeführt. Zur Durchführung des Reverse Engineerings des Bauteils oder Bauteilbereichs wird zuerst der insbesondere beschädigte Abschnitt sowie ggf. zusätzlich der sich an den beschädigten Abschnitt anschließende Toleranzabschnitt aus dem beschädigten, zu reparierenden Bauteil herausgearbeitet. Anschließend erfolgt eine Vermessung des Bauteils oder Bauteilbereichs, z.B. durch mechanische oder optische Messwertaufnehmer oder durch Computertomografie und anschließende Flächenrückführung. Als Ergebnis erhält man einen 3D-CAD-Datensatz des beschädigten oder zu modifizierenden Bauteils oder Bauteilbereichs, aus dem zuvor der beschädigte Abschnitt und ggf. ein Toleranzabschnitt herausgearbeitet worden sind. Aus diesem 3D-CAD-Datensatz des bearbeiteten Bauteils oder Bauteilbereichs wird durch Differenzbildung mit dem 3D-CAD-Datensatz des unbeschädigten Bauteils der 3D-CAD-Datensatz des herzustellenden Ersatzteils ermittelt. In diesem Zusammenhang kann es vorteilhaft sein, die Differenzbildung manuell oder durch entsprechende mathematische Verfahren zu korrigieren, um z.B. Fertigungstoleranzen und Verformungen oder Verschleiß an dem Bauteil während des. Betriebs der Gasturbine zu berücksichtigen. Diese Korrektur des so ermittelten 3D-CAD-Datensatzes des herzustellenden Ersatzteils obliegt dem hier angesprochenen Fachmann.

Im Zusammenhang mit der oben beschriebenen Ermittlung des 3D-CAD-Datensatzes des herzustellenden Ersatzteils wurde davon ausgegangen, dass ein 3D-CAD-Datensatz des unbeschädigten Bauteils bzw. eines entsprechenden Neuteils vorliegt. Liegt kein derartiger Datensatz für das unbeschädigte Bauteil vor, so wird gemäß Fig. 2 im Vorfeld ein Reverse Engineering des unbeschädigten Bauteils bzw. des entsprechenden Neuteils durchgeführt. Auch dies kann mithilfe mechanischer oder optischer Messwertaufnehmer oder Computertomografie und anschließender Flächenrückführung erfolgen. Nach Ermittlung bzw. Generierung des 3D-CAD-Datensatzes für das ungeschädigte Bauteil kann dann, wie bereits oben beschrieben, fortgefahren werden.

Soll im Zusammenhang mit der Reparatur des Bauteils der Gasturbine eine konstruktive Modifikation des Bauteils erfolgen, z.B. eine Verstärkung oder Reduzierung einer Wanddicke des Bauteils oder eine Erhöhung eines Übergangsradius, so werden sogenannte Anschlussmaße für das zu reparierende Bauteil bestimmt. In diesem Fall entsteht der 3D-CAD-Datensatz des herzustellenden Ersatzteils durch eine Kombination von Reverse Engineering sowie Forward Engineering.

Wie bereits erwähnt, wird der 3D-CAD-Datensatz des herzustellenden Ersatzteils in einen Maschinendatensatz gewandelt. Der 3D-CAD-Datensatz des herzustellenden Ersatzteils ist maschinen-unabhängig. Die Herstellung des herzustellenden Ersatzteils erfolgt auf einer vom eingesetzten Rapid Manufacturing Verfahren abhängigen Maschine. Der maschinenunabhängige 3D-CAD-Datensatz muss demnach in einen maschinenlesbaren Datensatz transformiert werden. Hierzu erfolgt die Umwandlung des 3D-CAD-Datensatzes des herzustellenden Ersatzteils in den Maschinendatensatz.

Nachdem der insbesondere beschädigte Abschnitt und ggf. ein sich anschließender Toleranzabschnitt aus dem zu reparierenden oder zu modifizierenden Bauteil herausgearbeitet wurde und nachdem ein Maschinendatensatz für das herzustellende Ersatzteil generiert wurde, erfolgt die Herstellung des Ersatzteils mithilfe eines Rapid Manufacturing Prozesses. Als Rapid Manufacturing Prozess kommt erfindungsgemäß Selective Laser Sintering - kurz SLS - oder Selective Laser Melting - kurz SLM - oder Laserstrahlgenerieren - kurz LG - zum Einsatz.

Im Zusammenhang mit den oben genannten Rapid Manufacturing Prozessen sei angemerkt, dass Selective Laser Sintering (SLS) ein periodischer zweistufiger Prozess ist, bei dem eine definierte Schicht feinkörnigen Metallpulvers auf eine Unterlage aufgebracht wird und die Kontur des Ersatzteils von einem Laserstrahl gescannt wird. Dabei werden Körner innerhalb der definierten Schicht sowie mit der Unterlage versintert. Anschließend wird die Unterlage abgesenkt, eine definierte Pulverschicht wird erneut aufgebracht und wiederum wird die Kontur der nächsten Schicht so gescannt, dass sowohl eine Bindung mit den Körnern der unteren Schicht als auch der aktuellen Schicht erfolgt. Durch eine Parameteroptimierung und ggf. geeignete Nachbehandlung können beim Sintervorgang auftretende Porositäten am herzustellenden Ersatzteil minimiert werden. Die mechanischen Eigenschaften des herzustellenden Ersatzteils werden dann primär durch die Restporositäten bestimmt.

Selective Laser Melting (SLM) ist mit Selective Laser Sintering vergleichbar. Ein wesentlicher Unterschied liegt darin, dass beim Selective Laser Melting die Körner vollständig aufgeschmolzen werden, so dass eine nahezu 100%-ige Werkstoffdichte ohne Porositäten erzielt werden kann. Daher können mithilfe des Selective Laser Melting mechanische Festigkeitskennwerte für das so hergestellte Ersatzteil erreicht werden, die weitestgehend der Spezifikation des verwendeten Werkstoffs entsprechen. Sowohl beim Selective Laser Sintering als auch beim Selective Laser Melting bestehen nahezu uneingeschränkte Freiheiten in der Geometrie des herzustellenden Ersatzteils.

Das Laserstrahlgenerieren (LG) ermöglicht lediglich die Herstellung von Ersatzteilen mit geringerer geometrischer Komplexität. Im Gegensatz zum Selective Laser Sintering bzw. Selective Laser Melting handelt es sich beim Laserstrahlgenerieren um ein kontinuierliches Verfahren, bei dem ein Pulver oder ein Draht direkt in einen fokussierten Laserstrahl eingebracht, aufgeschmolzen und schmelzmetallurgisch verbunden werden. Mithilfe des Laserstrahlgenerierens können polykristalline und gerichtet erstarrte sowie prinzipiell auch einkristalline Ersatzteile aus nahezu beliebigen metallischen Werkstoffen hergestellt werden.

Im Sinne der Erfindung wird mithilfe des Rapid Manufacturing Prozesses ein eigenständiges Ersatzteil für das zu reparierende bzw. zu modifizierende Bauteil der Gasturbine hergestellt. Das Laserstrahlgenerieren, Selective Laser Sintering, Selective Laser Melting oder vergleichbare Verfahren können als Rapid Manufacturing Prozess im Sinne der Erfindung zur Herstellung des Ersatzteils eingesetzt werden.

Nach der Herstellung des herzustellenden Ersatzteils und vor der Integration des Ersatzteils in das zu reparierende bzw. zu modifizierende Bauteil kann eine Nachbearbeitung des hergestellten Ersatzteils erfolgen. Eine Nachbearbeitung des hergestellten Ersatzteils ist nicht zwingend erforderlich, kann jedoch unter Umständen vorteilhaft sein. So kann zum Beispiel eine Nachbehandlung bzw. Oberflächenbearbeitung des hergestellten Ersatzteils mit dem Zweck durchgeführt werden, das hergestellte Ersatzteil zu reinigen, die Oberflächenqualität zu verbessern oder die mechanischtechnologischen Eigenschaften des Ersatzteils zu optimieren. Zu den eigenschaftsverbessernden Maßnahmen zur Nachbearbeitung zählen zum Beispiel eine Warmbehandlung wie das Lösungsglühen und das Aushärten. Auch kann heißisostatisches Pressen als Nachbearbeitung des Ersatzteils durchgeführt werden. Dieses heißisostatische Pressen ist insbesondere dann vorteilhaft, wenn Porositäten, wie sie beim Selective Laser Sintering auftreten können, verschlossen werden sollen.

Das hergestellte und ggf. nachbearbeitete Ersatzteil kann sodann in das zu reparierende bzw. zu modifizierende Bauteil integriert bzw. installiert werden. So kann das hergestellte Ersatzteil mithilfe eines Fügeverfahrens in das Bauteil der Gasturbine integriert werden. Als Fügeverfahren kommen Laserschweißen, WIG-Schweißen, EB-Schweißen oder auch Löten zum Einsatz. Nach dem Fügeprozess kann eine Nachbearbeitung des reparierten bzw. modifizierten Bauteils erfolgen. Bei der Nachbearbeitung kann wiederum zum Beispiel eine Warmbehandlung oder eine Oberflächenbearbeitung am reparierten Bauteil durchgeführt werden. Auch ist es möglich, das reparierte oder modifizierte Bauteil einem Beschichtungsverfahren zu unterziehen.

Mithilfe des erfindungsgemäßen Verfahrens ist eine schnelle Reparatur von Bauteilen einer Gasturbine, insbesondere eines Flugzeigtriebwerks, möglich. Es können Ersatzteile mit hoher Genauigkeit und großer geometrischer Komplexität hergestellt werden. Durch Verwendung des erfindungsgemäßen Verfahrens entfällt der nach dem Stand der Technik erforderliche Modell- und Formenbau. Die Fertigung des Ersatzteils kann direkt aus 3D-CAD-Daten erfolgen, die in einen maschinenlesbaren Datensatz umgewandelt werden. Es können Schadensfälle repariert werden, die aufgrund ihrer Größe und geometrischen Komplexität bislang nicht reparabel waren. Der Verbindungsbereich von Ersatzteil und zu reparierendem Bauteil kann in Zonen des Bauteils gelegt werden, die einer geringen Beanspruchung unterliegen. Weiterhin ist es möglich, die Ersatzteile aus dem gleichen oder einem anderen Werkstoff wie das zu reparierende Bauteil herzustellen. Durch die Erfindung ergeben sich völlig neue Möglichkeiten für die Reparatur von Bauteilen einer Gasturbine.

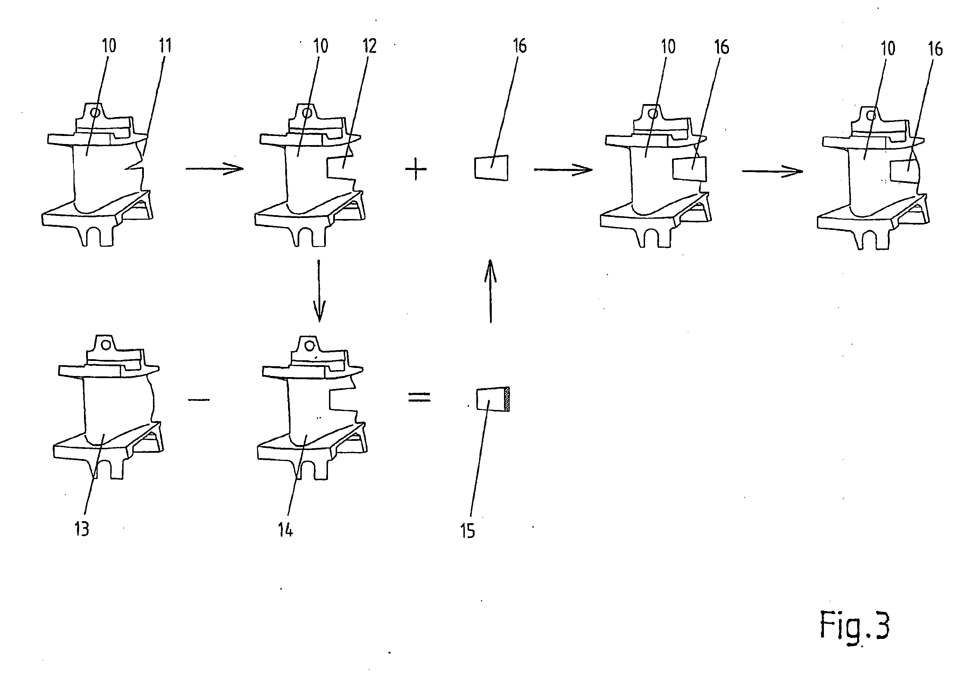

Fig. 3 verdeutlicht das erfindungsgemäße Verfahren anhand eines Ausführungsbeispiels. So wird beim in Fig. 3 dargestellten Ausführungsbeispiel ein stationäres Bauteil 10, nämlich eine feststehende Leitschaufel eines Flugzeugtriebwerks, repariert. Fig. 3 zeigt das zu reparierende Bauteil 10 mit einem beschädigten Abschnitt 11, wobei es sich bei dem beschädigten Abschnitt 11 um einen Breitspaltriss mit einer Rissbreite von deutlich größer als 1 mm handelt. Ein derartiger Breitspaltriss in einem warmrissanfälligen Material ist durch Reparaturverfahren, die aus dem Stand der Technik bekannt sind, nicht mehr reparabel. Im Ausführungsbeispiel der Fig. 3 wird davon ausgegangen, dass es sich bei der Beschädigung im beschädigten Abschnitt 11 um einen Impact-Schaden des Bauteils 10 handelt, der nicht sehr häufig auftritt. Es liegt demnach eine nicht-systematische Beschädigung des Bauteils vor.

Der beschädigte Abschnitt 11 sowie ein sich an den beschädigten Abschnitt 11 anschließender Toleranzabschnitt werden aus dem Bauteil 10 auf individuelle Art und Weise herausgearbeitet, zum Beispiel durch Senkerodieren. Es kommt demnach keine an die spezielle Beschädigung des Bauteils 10 angepasste Vorrichtung zum Einsatz. Fig. 3 zeigt das erfindungsgemäße Bauteil 10 mit einem aus dem Bauteil 10 herausgetrennten Reparaturabschnitt 12, wobei sich der Reparaturabschnitt 12 aus dem beschädigten Abschnitt 10 und dem sich an den beschädigten Abschnitt 10 anschließenden Toleranzabschnitt zusammensetzt.

Im Ausführungsbeispiel gemäß Fig. 3 liegt ein Datensatz für das unbeschädigte Bauteil vor. Fig. 3 visualisiert diesen Datensatz als CAD-Datensatz 13 des unbeschädigten Bauteils 10. Bedingt dadurch, dass, wie oben dargestellt, ein nicht-systematischer Schadenfall am Bauteil 10 vorliegt, wird ein Reverse Engineering des beschädigten Bauteils 10 durchgeführt. Das Reverse Engineering erfolgt am beschädigten Bauteil 10, aus welchem der Reparaturabschnitt 12 herausgetrennt worden ist. Durch Computertomografie und anschließende Flächenrückführung wird ein CAD-Datensatz 14 für das beschädigte Bauteil ermittelt. Anschließend wird eine Differenz zwischen dem CAD-Datensatz 13 des unbeschädigten Bauteils und dem CAD-Datensatz 14 des beschädigten Bauteils durchgeführt. Als Ergebnis erhält man einen CAD-Datensatz 15 des herzustellenden Ersatzteils.

Der CAD-Datensatz 15 des herzugstellenden Ersatzteils kann einer manuellen Nachbehandlung unterzogen werden. Weiterhin wird durch die Nachbearbeitung des CAD-Datensatzes für das herzustellende Bauteil im gezeigten Ausführungsbeispiel eine Bearbeitungszugabe für das herzustellende Ersatzteil 16 vorgesehen, um einen Übergang in der Außenkontur zwischen Bauteil und Ersatzteil absatzfrei herstellen zu können. Der nachbearbeitete CAD-Datensatz 15 für das herzustellende Ersatzteil 16 wird in einen maschinenlesbaren Datensatz gewandelt und durch Verwendung eines Rapid Manufacturing Prozesses wird sodann das Ersatzteil 16 hergestellt.

Beim Ausführungsbeispiel handelt es sich beim zu reparierenden Bauteil 10 um eine Leitschaufel auf einer Nickelbasis-Legierung. Als Rapid Manufacturing Prozess kommt Selective Laser Sintering zum Einsatz. Feinkörniges Nickelbasis-Pulver mit einer Korngröße von 10 bis 80 µm und einem Sauerstoffgehalt von weniger als 200 ppm wird in einen Sinterraum einer Lasersinteranlage gegeben und dieser Raum wird mit Argon oder einem anderen inerten oder einem reduzierenden Gas gefüllt. Darauffolgend erfolgt eine Belichtung mit einem CO₂-Laser, mit einer Strahlausgangsleistung von vorzugsweise 200 W und einem Fokusdurchmesser von vorzugsweise 0,36 mm. Nach der Belichtung der ersten Schicht wird eine Plattform um 20 bis 80 µm abgesenkt, erneut wird mittels eines Abstreifers Nickelbasis-Pulver aufgetragen und so dann entsprechend der Kontur der zweiten Schicht erneut belichtet. Dieser Vorgang wird so lange wiederholt, bis das herzustellende Ersatzteil 16 fertig aufgebaut ist. In diesem Zusammenhang sei angemerkt, dass sich eine Vorwärmung oder Nachwärmung der Unterlage und/oder des Pulvers vorteilhaft auf den Sintervorgang auswirkt. Die Vorwärmung oder Nachwärmung kann induktiv über die Unterlage erfolgen oder direkt durch den Laser durch eine Vorbelichtung mit einem defokussiertem Strahl oder durch Einsatz einer Bifokaloptik.

Das so hergestellte Ersatzteil 10 kann einer Nachbearbeitung, zum Beispiel einem kapsellosen heißisostatischem Pressen unterzogen werden.

Das nachbearbeitete Ersatzteil 16 wird sodann gemäß Fig. 3 in das zu reparierende Bauteil 10, nämlich in den Reparaturabschnitt 12 des Bauteils 10, integriert. Nach dem hier gezeigten Ausführungsbeispiel erfolgt dies dadurch, dass das Ersatzteil 16 mittels Punktschweißen in die Leitschaufel geheftet wird, mit einer geeigneten Lotmischung zum Verbindungslöten versehen wird und im Vakuumofen gelötet wird. Anschließend erfolgt ein Diffusionsglühen.

Nachdem das Ersatzteil 16 in das zu reparierende Bauteil 10 integriert wurde, erfolgt eine Nachbearbeitung des zu reparierenden Bauteils. Im Ausführungsbeispiel der Fig. 3 wird während der Nachbearbeitung die Außenkontur des in das Bauteil 10 integrierten Ersatzteils 16 nachbearbeitet. Dies erfolgt im Ausführungsbeispiel durch mechanisches Schleifen. Abschließend erfolgt eine Beschichtung des reparierten Bauteils 10.

### Bezugszeichenliste

- Bauteil: 10
- Abschnitt: 11
- Reparaturabschnitt: 12
- CAD-Datensatz: 13
- CAD-Datensatz: 14
- CAD-Datensatz: 15
- Ersatzteil: 16

## Patentansprüche

1. Verfahren zur Reparatur und/oder Modifikation von Bauteilen einer Gasturbine, insbesondere eines Flugtriebwerks, bei dem zumindest ein insbesondere beschädigter Abschnitt (11) des zu reparierenden und/oder zu modifizierenden Bauteils (10) aus dem Bauteil (10) herausgearbeitet und ein hergestelltes Ersatzteil (16) in das zu reparierende Bauteil (10) integriert wird, **dadurch gekennzeichnet, dass** das Ersatzteil (16) mit Hilfe eines Rapid Manufacturing Prozesses hergestellt wird und dass zur Ermittlung eines hierfür notwendigen CAD-Datensatzes (15) eine Differenz zwischen dem CAD-Datensatz (13) eines unbeschädigten Bauteils oder Neuteils und dem CAD-Datensatz (14) des beschädigten Bauteils mit herausgearbeitetem Abschnitt (11) gebildet wird.

2. Verfahren nach Anspruch 1, **dadurch gekennzeichnet, dass** im Zusammenhang mit dem Herausarbeiten des beschädigten Abschnitts (11) der Abschnitt (11) selbst des zu reparierenden und/oder zu modifizierenden Bauteils und zusätzlich ein sich an den Abschnitt (11) anschließender Toleranzabschnitt aus dem Bauteil (10) herausgetrennt wird.

3. Verfahren nach Anspruch 1 oder 2, **dadurch gekennzeichnet, dass** zumindest je Bauteil und Schadensfall einmal ein CAD-Datensatz (15) für das herzustellende Ersatzteil (16) erzeugt wird, und dass anschließend dieser CAD-Datensatz (15) in einen Maschinendatensatz umgewandelt wird.

4. Verfahren nach einem der Ansprüche 1 bis 3, **dadurch gekennzeichnet, dass** im Zusammenhang mit der Ermittlung des CAD-Datensatzes (15) für das herzustellende Ersatzteil (16) überprüft wird, ob ein Datensatz (13) für das zu reparierende, jedoch unbeschädigte Bauteil vorliegt, und dass dann, wenn kein derartiger Datensatz (13) vorliegt, ein Reverse Engineering des unbeschädigten Bauteils zur Ermittlung eines CAD-Datensatzes des unbeschädigten Bauteils durchgeführt wird.

5. Verfahren nach einem der Ansprüche 1 bis 4, **dadurch gekennzeichnet, dass** im Zusammenhang mit der Ermittlung des CAD-Datensatzes (15) für das herzustellende Ersatzteil (16) überprüft wird, ob erstens eine systematische Beschädigung des Bauteils vorliegt und ob zweitens die Geometrie des zu reparierenden und/oder zu modifizierenden Bauteils reproduzierbar ist, und dass dann, wenn keine systematische Beschädigung vorliegt und/oder die Geometrie des Bauteils nicht reproduzierbar ist, ein Reverse Engineering des konkreten Bauteils (10) zur Ermittlung eines CAD-Datensatzes (14) des Bauteils durchgeführt wird, wobei zuvor zumindest der insbesondere beschädigte Abschnitt (11) aus dem Bauteil (10) herausgearbeitet wird.

6. Verfahren nach einem der Ansprüche 1 bis 5, **dadurch gekennzeichnet, dass** als Rapid Manufacturing Prozess Selective Laser Sintering verwendet wird.

7. Verfahren nach einem der Ansprüche 1 bis 5, **dadurch gekennzeichnet, dass** als Rapid Manufacturing Prozess Selective Laser Melting verwendet wird.

8. Verfahren nach einem der Ansprüche 1 bis 5, **dadurch gekennzeichnet, dass** als Rapid Manufacturing Prozess Laserstrahlgenerieren verwendet wird.

9. Verfahren nach einem der Ansprüche 1 bis 8, **dadurch gekennzeichnet, dass** vor der Integration des hergestellten Ersatzteils (16) in das zu reparierende und/oder zu modifizierende Bauteil (10) eine Nachbearbeitung des Ersatzteils (16) durchgeführt wird.

10. Verfahren nach einem Ansprüche 1 bis 9 **dadurch gekennzeichnet, dass** das hergestellte Ersatzteil (16) mit Hilfe eines Fügeprozesses in das Bauteil (10) integriert wird, und dass nachfolgend vorzugsweise eine Nachbearbeitung des reparierten und/oder zu modifizierenden Bauteils (10) durchgeführt wird.

## Claims

1. Method of repairing and/or modifying components of a gas turbine, in particular an aircraft engine, whereby at least one specifically damaged portion (11) of the component (10) to be repaired and/or modified is removed from the component (10) and a produced replacement part (16) is integrated in the component (10) to be repairer, **characterised in that** the replacement part (16) is produced with the aid of a rapid manufacturing process and in order to determine a CAD data set (15) necessary for this purpose, a difference is established between the CAD data set (13) of an undamaged component or new part and the CAD data set (14) of the damaged component with removed portion (11).

2. Method as claimed in claim 1, **characterised in that** in connection with removing the damaged portion (11), the actual portion (11) of the component to be repaired and/or modified is removed from the component (10) in addition to a tolerance portion adjoining the portion (11).

3. Method as claimed in claim 1 or 2, **characterised in that** at least one CAD data set (15) for the replacement part (16) is produced for each component and type of damage and this CAD data set (15) is then converted into a machine data set.

4. Method as claimed in one of claims 1 to 3, **characterised in that**, in connection with determining the CAD data set (15) for the replacement part (16) to be produced, a check is run to ascertain whether a data set (13) exists for the component to be repaired but in an undamaged state, after which, if no such data set (13) exists, a reverse engineering of the undamaged component is undertaken in order to determine a CAD data set of the undamaged component.

5. Method as claimed in one of claims 1 to 4, **characterised in that**, in connection with determining the CAD data set (15) for the replacement part (16), a check is run to ascertain whether, firstly, there is systematic damage to the component, and, secondly, whether the geometry of the component to be repaired and/or modified is reproducible, and if there is no systematic damage and/or the geometry of the component is not reproducible, a reverse engineering of the specific component (10) is undertaken in order to determine a CAD data set (14) of the component, and at least the specifically damaged portion (11) is removed from the component (10) beforehand.

6. Method as claimed in one of claims 1 to 5, **characterised in that** selective laser sintering is used as the rapid manufacturing process.

7. Method as claimed in one of claims 1 to 5, **characterised in that** selective laser melting is used as the rapid manufacturing process.

8. Method as claimed in one of claims 1 to 5, **characterised in that** laser generation is used as the rapid manufacturing process.

9. Method as claimed in one of claims 1 to 8, **characterised in that**, before integrating the produced replacement part (16) in the component (10) to be repaired and/or modified, finishing work is carried out on the replacement part (16).

10. Method as claimed in one of claims 1 to 9, **characterised in that** the produced replacement part (16) is integrated in the component (10) with the aid of a joining process, after which finishing work is preferably carried out on the component (10) to be repaired and/or modified.

## Revendications

1. Procédé de réparation et/ou de modification de pièces de construction de turbine à gaz, en particulier dans un groupe moteur d'avion, dans lequel au moins une section (11) endommagée de la pièce de construction (10) à réparer et/ou à modifier est dégagée de la pièce de construction (10) pour y être remplacée par une pièce de rechange fabriquée (16), intégrée à la pièce de construction à réparer (10),
**caractérisé en ce que**
la pièce de rechange (16) est fabriquée par un procédé de fabrication rapide (*rapid manufacturing*) et pour déterminer un jeu de données CAO (15) (conception assistée par ordinateur) nécessaire, une différence est formée entre le jeu de données CAO (13) d'une pièce de construction intacte ou d'une pièce neuve et le jeu de données CAO (14) de la pièce de construction endommagée de laquelle la section (11) a été dégagée.

2. Procédé selon la revendication 1,
**caractérisé en ce qu'**
en même temps que la section (11) de la pièce de construction à réparer et/ou à modifier, une section de tolérance se raccordant à la section (11) est séparée de la pièce de construction (10).

3. Procédé selon la revendication 1 ou 2,
**caractérisé en ce qu'**
au moins une fois, pour chaque pièce de construction et chaque dommage, un jeu de données CAO (15) est produit pour la pièce de rechange à fabriquer (16), ensuite ce jeu de données CAO (15) est converti en un jeu de données de machine.

4. Procédé selon l'une des revendications 1 à 3,
**caractérisé en ce que**
en relation avec la détermination du jeu de données CAO (15) pour la pièce de rechange (16) à fabriquer, on vérifie si un jeu de données CAO (13) existe pour une pièce intacte semblable à la pièce de construction à réparer et s'il n'existe pas un tel jeu de données CAO (13), on effectue un *reverse engineering* (ingénierie inverse) de la pièce de construction intacte afin d'en déterminer un.

5. Procédé selon l'une des revendications 1 à 4,
**caractérisé en ce que**
en relation avec la détermination du jeu de données CAO (15) pour la pièce de rechange (16) à fabriquer, on vérifie si premièrement il y a une détérioration systématique de la pièce de construction et si deuxièmement la géométrie de la pièce de construction à réparer et/ou à modifier est reproductible ; et lorsqu'il n'y a pas de détérioration systématique et/ou que la géométrie de la pièce de construction n'est pas reproductible, on effectue une conception par ingénierie inverse de la pièce de construction concrète (10) en vue de déterminer un jeu de données CAO (14) de la pièce de construction, la section endommagée (11) étant dégagée au moins au préalable de la pièce de construction (10).

6. Procédé selon l'une des revendications 1 à 5,
**caractérisé en ce qu'**
on utilise le frittage sélectif par laser comme procédé de fabrication rapide.

7. Procédé selon l'une des revendications 1 à 5,
**caractérisé en ce qu'**
on utilise le mélange sélectif par laser comme procédé de fabrication rapide.

8. Procédé selon l'une des revendications 1 à 5,
**caractérisé en ce qu'**
on utilise la génération par faisceau laser comme procédé de fabrication rapide.

9. Procédé selon l'une des revendications 1 à 8,
**caractérisé en ce qu'**
on effectue un réusinage de la pièce de rechange (16) avant d'intégrer la pièce de rechange fabriquée (16) dans la pièce de construction à réparer et/ ou à modifier (10).

10. Procédé selon l'une des revendications 1 à 9,
**caractérisé en ce qu'**
on intègre la pièce de rechange fabriquée (16) dans la pièce de construction (10) à l'aide d'un procédé d'assemblage, puis on effectue de préférence un réusinage de la pièce de construction à réparer et/ou à modifier (10).
